# EUROPEAN PATENT SPECIFICATION

(11) **EP 4 713 584 B1**
(45) Date of publication and mention of the grant of the patent: **09.09.2026**
(21) Application number: 24737994.4
(22) Date of filing: 03.07.2024
(51) Int. Cl.: F03G 7/06, F16K 31/00, F01L 9/20, F16K 31/02

(54) **SMA-BASED ACTUATOR SUBASSEMBLY AND VALVES INCORPORATING IT**
SMA-BASIERTE AKTUATORUNTERBAUGRUPPE UND VENTILE DAMIT
SOUS-ENSEMBLE ACTIONNEUR À BASE DE SMA ET SOUPAPES INCORPORANT CELUI-CI

(30) Priority: 04.07.2023 IT 202300013932
(43) Date of publication of application: 25.03.2026
(73) Proprietor: Actuator Solutions GmbH, 91710 Gunzenhausen (DE)
(72) Inventor: KRACH, Martin, 91785 Pleinfeld (DE); STOCK, Manuel, 91586 Lichtenau (DE); KÖPFER, Markus, 73495 Stoedtlen-Regelsweiler (DE)
(74) Representative: Novagraaf Group
(86) International application number: PCT/EP2024/068748
(87) International publication number: WO 2025/008408

(56) References cited:
- JP-A- 2006 125 445
- US-A1- 2012 151 913
- US-B2- 10 337 635

## Description

The present invention is inherent to a Shape Memory Alloy (SMA) wire-based actuator subassembly, to valves incorporating it and their use.

A field in which the advantages given by the use of SMA wires is recognized since a long time is the fluidic valve control, as described in the U.S. Pat. Nos. 3,835,659 and 4,973,024 where a valve element is driven by a SMA wire against the action of a biasing element. A specific application where these advantages are of particular relevance is micro-fluidic valves and the so-called "lab on a chip" application, such as described in the paper "Electronic control of elastomeric microfluidic circuits with shape memory actuators" by Vyawahare et al., published in 2008 on labchip, number 8, pages 1530-1535.

Improved SMA-based valves are continuously developed, as for example described in European patent EP 3894728, in the applicant's name. JP 2006/125445 and US 10337635 disclose various versions of SMA-based valves in which a SMA wire acts, in opposition to a biasing element, on a plunger that carries a diaphragm which closes an inflow passage. Depending on the arrangement of the biasing element, the valve may be a normally open valve, as in JP 2006/125445, or a normally closed valve as in US 10337635. The current for the SMA wire actuation is supplied through electrical connectors located close to the SMA wire holders, namely on the opposite side of the valve with respect to the plunger tip which carries the diaphragm.

Although the benefits of SMA-based valves are widely recognized, one of the improvements still not properly addressed is inherent to systems and applications requiring multiple valves to be separately controlled and actuated. Applications benefitting from these multiple valves systems are for example, high-end pneumatic mattresses, pneumatic toppers, comfort seats for cinemas, cars, aircrafts, wheelchairs.

An example of a SMA-based system capable of separate multiple actuation is given in the international patent application WO 2023/017158, in the applicant's name, achieving the plural controls of SMA-based actuators, by means of a particular SMA wiring configuration, namely a series of SMA wires in antagonistic configuration. Such system can achieve the goal of selective actuations with a SMA-based solution, but the particular SMA wiring configuration spans across different elements, and therefore separate maintenance is not possible.

Systems with multiple valves still need to be improved in two distinct aspects: on one side the easiness to add the valves onto a supporting module, and on the other side the possibility to easily replace one or more of such modules without lengthy operations on the whole system. These main drawbacks are overcome by the present invention that in a first aspect thereof consists in an actuator subassembly comprising the features recited in claim 1, and a valve comprising one or more such actuator subassemblies as recited in claim 13.

It is to be underlined that differently from the above-mentioned JP 2006/125445 and US 10337635, the present invention does not envision the use of a case for the actuator subassembly but an open structure, i.e. the support structure is a flat planar structure holding the actuator subassembly elements, thus resulting in a simpler, cheaper and less bulky subassembly. This also allows for the easy coupling of the support structures of two independent subassemblies, or even for using a single support structure for carrying two independently operated plungers, further reducing the bulkiness of the valve.

Furthermore, the reciprocal positioning and associated geometrical requirements of plunger, coupling means and electric terminals, the latter extending to the same side of the plunger tip differently from the above-cited prior art, allow for a quick and efficient coupling/uncoupling into fluid management and delivery systems with a single operation in which mechanical, electrical and fluidic connections/disconnections are all performed together.

The present invention will be further disclosed in the following by way of a detailed description of some embodiments thereof. In the description reference will be made to the figures of the attached drawings, wherein:
- figure 1 schematically shows a front view of an actuator subassembly according to a preferred embodiment of the present invention,
- figure 1A is an enlarged view of the dotted area A of figure 1,
- figure 2 schematically shows a perspective top view of a composite actuator subassembly structure according to a preferred embodiment of the present invention,

- figure 3 schematically shows a perspective top view of a valve according to the present invention,
- figure 4 schematically shows a perspective top view of the valve shown in figure 3, without the air-tight cap.

In order to make the figures easier to understand, dimensions and dimensional ratios of the elements have in some cases been altered, with particular and nonexclusive reference to SMA wire length and diameter.

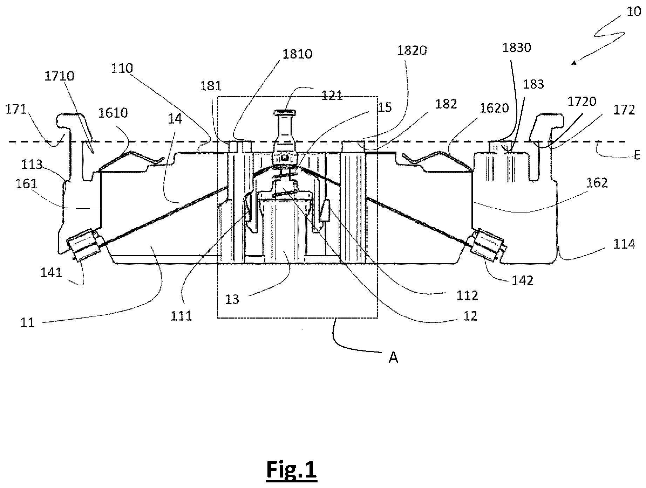

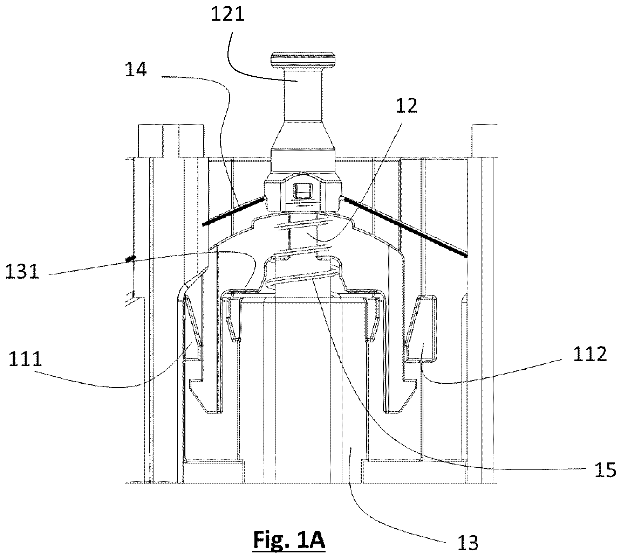

A schematic front view of an actuator subassembly 10 according to the present invention is shown in figure 1. The biggest component of the actuator subassembly 10 is its support 11 presenting a coupling surface 110, i.e. the surface that will come in contact with the bottom surface of the holding element (not shown) where the actuator subassembly 10 is going to be mounted/installed. For convenience, the coupling surface 110 will define the top/upper portion of the actuator subassembly even though such subassembly, in less preferable configurations, may be above the holding element, in a so called upside-down configuration (i.e. in such a case the coupling surface 110 will be the bottom portion that will come in contact with the top surface of the holding element).

Actuator subassembly 10 presents coupling elements 171, 172 protruding beyond the coupling surface 110, each having an engaging surface 1710, 1720, i.e. the surface that will come in contact with the top surface of the holding element, said engaging surfaces 1710, 1720 defining a virtual engaging plane E.

The distance between the support coupling surface 110 and the virtual engaging plane E is comprised between 0.5 and 3 mm, preferably between 1 and 2 mm, and presents a variation not greater than 10% over the whole of the coupling surface 110 to ensure a fluid-tight coupling between the actuator subassembly 10 and the holding element. For the sake of clarity, the 10% variation is an absolute requirement, meaning that the difference between the maximum and minimum distance between the support coupling surface 110 and the virtual engaging plane E, divided by the maximum distance is ≤0.1.

The purpose of such a limited variation is to guarantee a proper sealing between the subassembly and the holding element, in order to limit the risk of leakage of the fluid controlled by the valve. This is particularly important in case the fluid is a liquid, since the electrical connectors supplying the current to the SMA wire extend to the same top portion where the plunger tip is located. In this respect, the connection between the subassembly and the holding element is preferably made tighter by providing screw seats 181, 182, 183 in the top portion of support 11, preferably having top surfaces 1810, 1820, 1830 aligned with the virtual engaging plane E (as shown in Fig.1).

Actuator subassembly 10 further comprises a SMA wire 14, fixed onto support 11 via two SMA wire holders 141, 142. Actuation and de-actuation of the SMA wire 14 causes movement of a movable plunger 12 having a body comprising an elongated part extending into a guiding element 13 present on support 11. The movable plunger 12 has a tip 121 protruding from the coupling surface 110 and extending above the virtual engaging plane E. Preferably, the plunger tip 121 is interlocked onto the body of the movable plunger 12, with the central portion of the SMA wire 14 interposed between the movable plunger tip 121 and the movable plunger elongated part (i.e. its body).

In order to ensure a stable contact between the SMA wire 14 and the movable plunger body, preferably a groove (not shown) is present on the movable plunger elongated part facing the movable plunger tip 121, this will ensure mechanical stability without the need to use less preferable permanent fixing means for the SMA wire 14, such as gluing or soldering.

The restoring force of the actuator subassembly 10, i.e. the force acting in opposition to the SMA wire 14, is provided by an elastic return element, such as a spring 15, fitted on the plunger body below the movable plunger tip 121.

In the embodiment shown in figure 1, the support structure 10 presents also two end stoppers 111, 112 (better shown in Fig.1A), positioned to engage with corresponding protrusions on the movable plunger 12, such end stoppers 111, 112 blocking the upward movement resulting from the SMA wire 14 de-actuation and due to the restoring force of spring 15.

Two electrical connectors 161, 162 to supply current to the SMA wire 14 extend one each from the SMA wire holders 141, 142 to the top portion of the support structure 11. Preferably, their terminal parts 1610, 1620 are flexible and extend at a height comprised between the coupling surface 110 and the virtual engaging plane E.

Preferably, as shown in figure 1, the actuator subassembly 10 presents as connecting means mechanical interlocks 171, 172 and screws that fit into seats 181, 182, 183; this is representative of the preferred embodiment, with projecting mechanical interlocks 171 and 172 providing a first fixing and positioning means for the actuator subassembly 10 onto the holding element, to make easier the most proper and stable fixing through screws (not shown) fitting into screw seats 181, 182, 183. This is a preferred embodiment of particular convenience, especially in the context of a plurality of actuator subassemblies to be mounted onto the same holding element, but the invention is not limited or in any way restricted to such arrangement and combination of coupling elements, or additional and alternate fixing means, such as gluing or heat staking also known as thermoplastic staking.

Figure 1A is an enlarged view of the dotted area A of figure 1 to better appreciate some details of the actuator subassembly 10. More in particular, details of plunger 12, elastic return element 15, and end stoppers 111 and 112 are better observable. It is also possible to appreciate that end stoppers 111 and 112 limit upward movement imparted by the return elastic element 15, whereas a downward end stopper 131 limits the movement imparted by the actuation of the SMA wire 14, this end stopper 131 being present onto the upper surface of the guiding element 13 facing the tip 121 of the movable plunger 12.

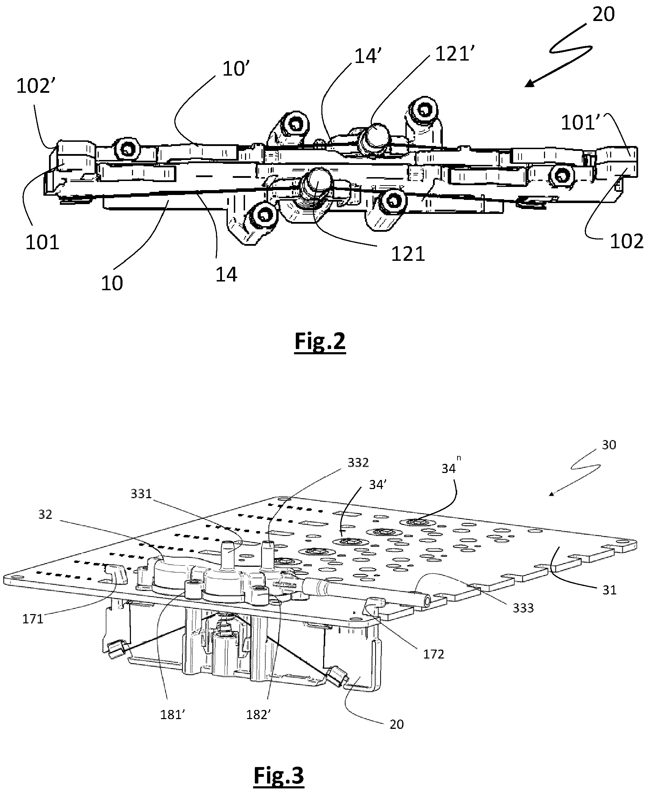

A perspective top view of a composite actuator subassembly structure 20 according to a preferred embodiment of the present invention is shown in figure 2. The composite actuator subassembly structure 20 comprises two actuators subassemblies 10, 10' as described in figure 1, each with a lower left corner 101, 101' and a lower right corner 102, 102', where the corners are identified looking at the movable plunger tip 121, 121' in an upward position and with the movable plunger being in front with respect to the relative support structure.

In other words, in the composite actuator subassembly structure 20 the lower left corner 101 of the actuator subassembly 10 is coupled with the lower right corner 102' of the actuator subassembly 10', and the lower right corner 102 of the actuator subassembly 10 is coupled with the lower left corner 101' of the actuator subassembly 10'. The composite actuator subassembly structure 20 may be obtained by coupling two distinct actuators subassemblies 10, 10', for example by means of clipping or mechanical sliders locking, even though less preferred solutions, such as soldering or gluing, may be used.

Alternately, a single common moulded support is used to mount the SMA wires 14, 14' and the other elements of the composite actuator subassembly structure as previously defined.

In the embodiments exemplified in figures 1 and 2, and more in general in all embodiments encompassed in the present invention, preferably the length of the SMA wire 14 is comprised between 40 mm and 130 mm, and most usefully the elastic return element 15 is a spring with an elastic constant comprised between 0.05 N/mm and 0.3 N/mm.

It is to be underlined that the present invention is not limited to a specific type of SMA wires, even though from a geometrical point of view the used SMA wires preferably have a diameter comprised between 25 µm and 500 µm; moreover, as the SMA wires are real objects, depart from a circular section is possible, therefore the term diameter is to be intended as the diameter of the smallest enclosing circle.

Even though the present invention is not limited to any specific SMA, preferred is the use of Ni-Ti-based alloys such as Nitinol, that may exhibit alternately a superelastic behavior or SMA behavior according to its processing. The properties of Nitinol and methods allowing to achieve them are widely known to those skilled in the art, see e.g. the article "A Study of the Properties of a High Temperature Binary Nitinol Alloy Above and Below its Martensite to Austenite Transformation Temperature" by Dennis W. Norwich presented at the SMST 2010 conference.

Nitinol may be used as such or its characteristics in terms of transition temperature may be tailored by adding elements such as Hf, Nb, Pt, Cu.

In another aspect, the present invention is directed to a valve comprising a Printed Circuit Board (PCB) holding at least an actuator subassembly 10 according to the present invention as previously defined. The PCB has an aperture in correspondence of the actuator subassembly movable plunger, said aperture being sealed by a compressible sealant, with an air-tight cap in hermetic contact with the PCB and encasing the plunger, the air-tight cap having at least two ports, with at least one port closable by the actuator subassembly movable plunger.

A schematic representation of such a valve 30 is shown in figure 3, comprising a composite actuator subassembly structure 20, mounted onto a holding PCB 31. In the preferred embodiment of figure 3, the composite actuator subassembly structure 20 has two different types of PCB coupling elements, projecting mechanical interlocks 171, 172 and screw seats, the former for a preliminary positioning and snap-on locking of the composite actuator subassembly structure 20 onto the holding PCB 31, the latter for the firm locking via screwing. This arrangement is very practical when a plurality of composite actuator subassembly structures 20 have to be mounted on the same PCB 31, or when just one composite actuator subassembly structure 20 needs to be replaced, rendering the servicing on a valve system (i.e. a holding PCB 31 mounting multiple composite actuator subassembly structures 20) easier and very practical.

Valve 30 comprises an air-tight cap 32 with a first port 331, a second port 332, and a third port 333; most commonly; this configuration is used for setting the pressure in an annexed device, so in this case the first port is connected to a pressurizing fluid line, the second port is connected to ambient for depressurizing and the third port is the driving one connected to the device. The air-tight cap 32 also includes coupling portions 181', 182' located in correspondence with the screw seats 181, 182.

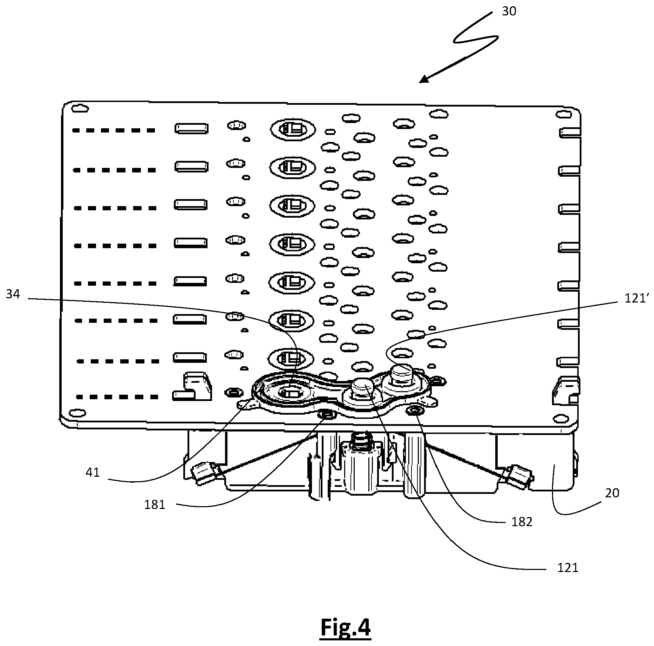

To better appreciate the interplay between PCB 31 and the composite actuator subassembly structure 20, figure 4 shows a perspective view of the embodiment of figure 3 without the air-tight cap 32.

As shown in figure 4, valve 30 comprises a pressure sensor 34, it is to be underlined that pressure sensor 34 is not an essential element of the present invention, but a preferred feature improving its performances. The present invention, in the assembled state and therefore addressing valves and valve systems, requires the presence of the compressible sealant layer 41 to close also the aperture between the PCB 31 and the composite actuator subassembly structure 20, and preferably extending and covering plunger tip 121. In a preferred embodiment, this layer extends also under the air-tight cap 32 to ease the attainment of the hermetic sealing with respect to other methods (i.e. soldering). It is to be underlined that, in order to improve figure readability and comprehension on the underlying structure, only the boundaries of the sealant layer 41 have been shown via an embossed line.

Preferably the compressible sealant has a thickness comprised between 0.2 mm and 2.7 mm (as measured in uncompressed/free regions), and most usefully there is employed an elastomeric material, preferably chosen from silicon or rubber.

Even though figure 3 shows a valve with two actuator subassemblies, or to be more precise a valve with a composite actuator subassembly structure 20 comprising two actuator subassemblies 10, 10', it is possible to realize valves with a single actuator subassembly 10 (i.e. a single plunger under the air-tight cap 32).

Single actuator subassembly solutions can be used to realize two-way valves or three-way valves, even though for three-way valves the preferred solution is to employ two actuator subassemblies per valve, preferably coupled together in a composite actuator subassembly structure, so that two plungers separately controlling valve ports are present in the same air-tight cap to set condition to a third (outlet) port present in the air-tight cap.

In case of two plungers present in the same valve, such as shown in figure 4, their maximum distance, defined as the distance between the centers of the plunger tips, is preferably comprised between 5 mm and 20 mm.

As outlined in figure 3 and 4, the same PCB can mount a plurality of actuator subassemblies according to the present invention so to realize a valve system, and in this regard, in figure 3 it is possible to observe (optional) pressure sensors 34', ...34ⁿ. Most usefully, the highest number of valves on the same PCB is 48, the greater the number of valves the higher the advantages of the present invention in terms of assembly and maintenance, even though such advantages are present also considering installation of a single valve per PCB.

The valves and valve systems according to the present invention are most usefully used to control fluid pressures or flows, with most common fluids being either liquids such as oil, water, or gasses in general, such as air.

As already mentioned, among the most useful applications for valves and valve systems according to present invention there are high-end pneumatic mattresses, pneumatic toppers, comfort seats for cinemas, cars, aircrafts, wheelchair seats but they may also be employed to control fluid reservoirs (such as, for example, air, water, oil); even though the invention is not limited to these applications, other exemplary application fields are in the automotive sectors, such as in windshield washers, or in vehicle seats adjustment by air flow adjustments, whose general operating principle is described in the US patent 7,517,279.

## Claims

1. An actuator subassembly (10) comprising:
- a support structure (11) with a support coupling surface (110), one or more coupling elements (171, 172) protruding beyond said support coupling surface (110) each presenting an engaging surface (1710, 1720), the support coupling surface (110) defining the top portion of the actuator subassembly (10) and said engaging surfaces (1710, 1720) defining a virtual engaging plane E,
- a movable plunger (12) installed on said support structure (11), said movable plunger (12) having a tip (121) protruding from the support coupling surface (110) and extending above said virtual engaging plane E,
- the movable plunger (12) having a body comprising an elongated part extending into a guiding element (13) present on the support structure (11),
- a SMA wire (14) whose extremities are fixed to two SMA wire holders (141, 142) installed on the support structure (11) and whose central portion is connected to an intermediate portion of the movable plunger (12) to cause its displacement upon actuation of said SMA wire (14),
- an elastic return element (15) acting in opposition to the SMA wire (14),
- two electrical connectors (161, 162) extending one each from said SMA wire holders (141, 142),
**characterized in that** the distance between the support coupling surface (110) and said virtual engaging plane E is comprised between 0.5 mm and 3 mm, preferably between 1 mm and 2 mm, and presents a variation not greater than 10% over the whole of the coupling surface (110), **and in that** said two electrical connectors (161, 162) extend to the top portion of the support structure (11).

2. An actuator subassembly (10) according to claim 1, wherein the coupling elements comprise projecting mechanical interlocks (171, 172).

3. An actuator subassembly (10) according to any of the previous claims, wherein the coupling elements comprise screw seats (181, 182, 183).

4. An actuator subassembly (10) according to any of the previous claims, wherein each electrical connector (161, 162) has a flexible portion (1610, 1620) that extends to a height between the support coupling surface (110) and the virtual engaging plane E.

5. An actuator subassembly (10) according to any of the previous claims, wherein the length of the SMA wire (14) is comprised between 40 mm and 130 mm.

6. An actuator subassembly (10) according to any of the previous claims, wherein the elastic return element (15) is a spring with an elastic constant comprised between 0.05 N/mm and 0.3 N/mm.

7. An actuator subassembly (10) according to any of the previous claims, wherein the support structure (11) has two end stoppers (111, 112) for limiting the travel of the movable plunger (12) when driven by the elastic return element (15).

8. An actuator subassembly (10) according to any of the previous claims, wherein the upper surface of the guiding element (13) presents an end stopper (131) for limiting the travel of the movable plunger (12) when driven by the SMA wire (14).

9. A composite actuator subassembly structure (20) comprising two actuator subassemblies (10, 10') according to any of claims 1-8.

10. A composite actuator subassembly structure (20) according to claim 9, wherein the two actuator subassemblies (10, 10') are joined together.

11. A composite actuator subassembly structure (20) according to claim 10, wherein the joining of the actuator subassemblies (10, 10') is achieved by clipping or through mechanical sliders.

12. A composite actuator subassembly structure (20) according to claim 9, wherein the two actuator subassemblies (10, 10') share a common support structure (11).

13. A valve comprising a PCB (31) holding at least an actuator subassembly (10) according to any of claims 1-8, said PCB (31) having an aperture in correspondence of the actuator subassembly movable plunger tip (121), said aperture being sealed by a compressible sealant (41), and an air-tight cap (32) in hermetic contact with the PCB (31) and encasing said plunger tip (121), said air-tight cap (32) having at least two ports (331, 332), with at least one of said ports closable by the plunger tip (121).

14. A valve according to claim 13, wherein it further includes a pressure sensor (34) located under the air-tight cap (32).

15. A valve according to claim 13 or 14, wherein it includes a composite actuator subassembly structure (20) according to any of claims 9-12.

16. A valve according to any of claims 13-15, wherein the number of ports of the air-tight cap (32) is 3.

17. A valve according to claim 15, wherein the maximum distance between the centers of the plunger tips (121, 121') is comprised between 5 mm and 20 mm.

18. A valve according to any of claims 13-17, wherein the compressible sealant (41) is also interposed between the PCB (31) and the air-tight cap (32).

19. A valve according to any of claims 13-18, wherein the compressible sealant (41) is an elastomeric material having thickness comprised between 0.2 mm and 2.7 mm.

20. A valve according to claim 19, wherein said elastomeric material is chosen from silicon or rubber.

21. A valve system comprising from 2 to 48 valves according to any of claims 13-20.

22. Method to control the pressure of a fluid in a device, wherein the pressure is controlled with a valve system according to claim 21.

23. Method according to claim 22, wherein the fluid is chosen from air, water, oil.

24. Method according to claim 22 or 23, wherein the device is a mattress, topper, seat, or fluid reservoir.

25. Method according to claim 22 or 23, wherein the device is an automotive component, preferably a windshield washer or a seat adjustment mechanism.

## Patentansprüche

1. Aktuatorunterbaugruppe (10), umfassend:
- einen Stützkörper (11) mit einer Stützkopplungsoberfläche (110), einem oder mehreren Kopplungselementen (171, 172), die über die Stützkopplungsoberfläche (110) hinausragen und jeweils eine Eingriffsoberfläche (1710, 1720) aufweisen, wobei die Stützkopplungsoberfläche (110) den oberen Abschnitt der Aktuatorunterbaugruppe (10) definiert und die Eingriffsoberflächen (1710, 1720) eine virtuelle Eingriffsebene E definieren,
- einen beweglichen Stößel (12), der an dem Stützkörper (11) angebracht ist, wobei der bewegliche Stößel (12) eine Spitze (121) aufweist, die über die Stützkopplungsoberfläche (110) hinausragt und sich über die virtuelle Eingriffsebene E erstreckt,
- den beweglichen Stößel (12), der einen Körper aufweist, der einen länglichen Teil umfasst, der sich in ein Führungselement (13) erstreckt, das an dem Stützkörper (11) vorhanden ist,
- einen SMA-Draht (14), dessen Enden an zwei SMA-Drahthaltern (141, 142) befestigt sind, die an dem Stützkörper (11) angebracht sind, und dessen Mittelabschnitt mit einem Zwischenabschnitt des beweglichen Stößels (12) verbunden ist, um dessen Verschiebung bei Betätigung des SMA-Drahts (14) zu bewirken,
- ein elastisches Rückstellelement (15), das dem SMA-Draht (14) entgegenwirkt,
- zwei elektrische Verbinder (161, 162), die sich jeweils von den SMA-Drahthaltern (141, 142) erstrecken,
**dadurch gekennzeichnet, dass** der Abstand zwischen der Stützkopplungsoberfläche (110) und der virtuellen Eingriffsebene E zwischen 0,5 mm und 3 mm, vorzugsweise zwischen 1 mm und 2 mm, umfasst und eine Abweichung von nicht mehr als 10 % über die gesamte Kopplungsoberfläche (110) aufweist, **und dass** sich die beiden elektrischen Verbinder (161, 162) zum oberen Abschnitt des Stützkörpers (11) erstrecken.

2. Aktuatorunterbaugruppe (10) nach Anspruch 1, wobei die Kopplungselemente vorstehende mechanische Verriegelungen (171, 172) umfassen.

3. Aktuatorunterbaugruppe (10) nach einem der vorstehenden Ansprüche, wobei die Kopplungselemente Schraubensitze (181, 182, 183) umfassen.

4. Aktuatorunterbaugruppe (10) nach einem der vorstehenden Ansprüche, wobei jeder elektrische Verbinder (161, 162) einen flexiblen Abschnitt (1610, 1620) aufweist, der sich auf eine Höhe zwischen der Stützkopplungsoberfläche (110) und der virtuellen Eingriffsebene E erstreckt.

5. Aktuatorunterbaugruppe (10) nach einem der vorstehenden Ansprüche, wobei die Länge des SMA-Drahtes (14) zwischen 40 mm und 130 mm umfasst.

6. Aktuatorunterbaugruppe (10) nach einem der vorstehenden Ansprüche, wobei das elastische Rückstellelement (15) eine Feder mit einer Elastizitätskonstante ist, die zwischen 0,05 N/mm und 0,3 N/mm umfasst.

7. Aktuatorunterbaugruppe (10) nach einem der vorstehenden Ansprüche, wobei der Stützkörper (11) zwei Endanschläge (111, 112) zur Begrenzung des Weges des beweglichen Stößels (12) aufweist, wenn dieser durch das elastische Rückstellelement (15) angetrieben wird.

8. Aktuatorunterbaugruppe (10) nach einem der vorstehenden Ansprüche, wobei die obere Oberfläche des Führungselements (13) einen Endanschlag (131) zur Begrenzung des Weges des beweglichen Stößels (12) aufweist, wenn dieser durch den SMA-Draht (14) angetrieben wird.

9. Zusammengesetzte Aktuatorunterbaugruppenstruktur (20), umfassend zwei Aktuatorunterbaugruppen (10, 10') nach einem der Ansprüche 1 bis 8.

10. Zusammengesetzte Aktuatorunterbaugruppenstruktur (20) nach Anspruch 9, wobei die zwei Aktuatorunterbaugruppen (10, 10') miteinander verbunden sind.

11. Zusammengesetzte Aktuatorunterbaugruppenstruktur (20) nach Anspruch 10, wobei die Verbindung der Aktuatorunterbaugruppen (10, 10') durch Verrasten oder durch mechanische Schieber erreicht wird.

12. Zusammengesetzte Aktuatorunterbaugruppenstruktur (20) nach Anspruch 9, wobei sich die zwei Aktuatorunterbaugruppen (10, 10') einen gemeinsamen Stützkörper (11) teilen.

13. Ventil, umfassend eine Leiterplatte (31), die mindestens eine Aktuatorunterbaugruppe (10) nach einem der Ansprüche 1 bis 8 hält, wobei die Leiterplatte (31) eine Öffnung korrespondierend zu der beweglichen Stößelspitze (121) der Aktuatorunterbaugruppe aufweist, wobei die Öffnung durch ein komprimierbares Abdichtungsmittel (41) abgedichtet ist, und eine luftdichte Kappe (32), die in hermetischem Kontakt mit der Leiterplatte (31) steht und die Kolbenspitze (121) umschließt, wobei die luftdichte Kappe (32) mindestens zwei Anschlüsse (331, 332) aufweist, wobei mindestens einer der Anschlüsse durch die Kolbenspitze (121) verschließbar ist.

14. Ventil nach Anspruch 13, wobei es ferner einen unter der luftdichten Kappe (32) angeordneten Drucksensor (34) einschließt.

15. Ventil nach Anspruch 13 oder 14, wobei es eine zusammengesetzte Aktuatorunterbaugruppenstruktur (20) nach einem der Ansprüche 9 bis 12 einschließt.

16. Ventil nach einem der Ansprüche 13 bis 15, wobei die Anzahl der Anschlüsse der luftdichten Kappe (32) 3 beträgt.

17. Ventil nach Anspruch 15, wobei der maximale Abstand zwischen den Mitten der Stößelspitzen (121, 121') zwischen 5 mm und 20 mm umfasst.

18. Ventil nach einem der Ansprüche 13 bis 17, wobei das komprimierbare Abdichtungsmittel (41) ebenfalls zwischen der Leiterplatte (31) und der luftdichten Kappe (32) angeordnet ist.

19. Ventil nach einem der Ansprüche 13 bis 18, wobei das komprimierbare Dichtungsmittel (41) ein elastomeres Material ist, das eine zwischen 0,2 mm und 2,7 mm umfasste Dicke aufweist.

20. Ventil nach Anspruch 19, wobei das elastomere Material ausgewählt ist aus Silikon oder Gummi.

21. Ventilsystem, umfassend 2 bis 48 Ventile nach einem der Ansprüche 13 bis 20.

22. Verfahren zum Steuern des Drucks eines Fluids in einer Vorrichtung, wobei der Druck mit einem Ventilsystem nach Anspruch 21 geregelt wird.

23. Verfahren nach Anspruch 22, wobei das Fluid ausgewählt ist aus Luft, Wasser, Öl.

24. Verfahren nach Anspruch 22 oder 23, wobei die Vorrichtung eine Matratze, eine Auflage, ein Sitz oder ein Fluidreservoir ist.

25. Verfahren nach Anspruch 22 oder 23, wobei die Vorrichtung eine Automobilkomponente ist, vorzugsweise eine Windschutzscheibenwaschanlage oder ein Sitzverstellmechanismus.

## Revendications

1. Sous-ensemble actionneur (10) comprenant :
- une structure de support (11) avec une surface d'accouplement de support (110), un ou plusieurs éléments d'accouplement (171, 172) faisant saillie au-delà de ladite surface d'accouplement de support (110) présentant chacun une surface de prise (1710, 1720), la surface d'accouplement de support (110) définissant la partie supérieure du sous-ensemble actionneur (10) et lesdites surfaces de prise (1710, 1720) définissant un plan de prise virtuel E,
- un piston mobile (12) installé sur ladite structure de support (11), ledit piston mobile (12) ayant une pointe (121) faisant saillie de la surface d'accouplement de support (110) et s'étendant au-dessus dudit plan de prise virtuel E,
- le piston mobile (12) ayant un corps comprenant une partie allongée s'étendant dans un élément de guidage (13) présent sur la structure de support (11),
- un fil SMA (14) dont les extrémités sont fixées à deux supports de fil SMA (141, 142) installés sur la structure de support (11) et dont la partie centrale est reliée à une partie intermédiaire du piston mobile (12) pour provoquer son déplacement lors de l'actionnement dudit fil SMA (14),
- un élément de rappel élastique (15) agissant en opposition au fil SMA (14),
- deux connecteurs électriques (161, 162) s'étendant à partir de chacun desdits supports de fil SMA (141, 142),
**caractérisé en ce que** la distance entre la surface d'accouplement de support (110) et ledit plan de prise virtuel E est comprise entre 0,5 mm et 3 mm, de préférence entre 1 mm et 2 mm, et présente une variation ne dépassant pas 10 % sur l'ensemble de la surface d'accouplement (110), **et en ce que** lesdits deux connecteurs électriques (161, 162) s'étendent vers la partie supérieure de la structure de support (11).

2. Sous-ensemble actionneur (10) selon la revendication 1, dans lequel les éléments d'accouplement comprennent des verrouillages mécaniques (171, 172) en saillie.

3. Sous-ensemble actionneur (10) selon l'une quelconque des revendications précédentes, dans lequel les éléments d'accouplement comprennent des sièges de vis (181, 182, 183).

4. Sous-ensemble actionneur (10) selon l'une quelconque des revendications précédentes, dans lequel chaque connecteur électrique (161, 162) a une partie flexible (1610, 1620) qui s'étend vers une hauteur entre la surface d'accouplement de support (110) et le plan de prise virtuel E.

5. Sous-ensemble actionneur (10) selon l'une quelconque des revendications précédentes, dans lequel la longueur du fil SMA (14) est comprise entre 40 mm et 130 mm.

6. Sous-ensemble actionneur (10) selon l'une quelconque des revendications précédentes, dans lequel l'élément de rappel élastique (15) est un ressort avec une constante élastique comprise entre 0,05 N/mm et 0,3 N/mm.

7. Sous-ensemble actionneur (10) selon l'une quelconque des revendications précédentes, dans lequel la structure de support (11) a deux butées d'extrémité (111, 112) destinées à limiter la course du piston mobile (12) lorsqu'il est entraîné par l'élément de rappel élastique (15).

8. Sous-ensemble actionneur (10) selon l'une quelconque des revendications précédentes, dans lequel la surface supérieure de l'élément de guidage (13) présente une butée d'extrémité (131) destinée à limiter la course du piston mobile (12) lorsqu'il est entraîné par le fil SMA (14).

9. Structure de sous-ensemble actionneur composite (20) comprenant deux sous-ensembles actionneurs (10, 10') selon l'une quelconque des revendications 1 à 8.

10. Structure de sous-ensemble actionneur composite (20) selon la revendication 9, dans laquelle les deux sous-ensembles actionneurs (10, 10') sont assemblés ensemble.

11. Structure de sous-ensemble actionneur composite (20) selon la revendication 10, dans laquelle l'assemblage des sous-ensembles actionneurs (10, 10') est réalisée par encliquetage ou au moyen de coulisseaux mécaniques.

12. Structure de sous-ensemble actionneur composite (20) selon la revendication 9, dans laquelle les deux sous-ensembles actionneurs (10, 10') partagent une structure de support (11) commune.

13. Soupape comprenant une PCB (31) maintenant au moins un sous-ensemble actionneur (10) selon l'une quelconque des revendications 1 à 8, ladite PCB (31) ayant une ouverture en correspondance avec la pointe (121) de piston mobile du sous-ensemble actionneur, ladite ouverture étant obturée par un produit d'étanchéité compressible (41), et un bouchon étanche à l'air (32) étant en contact hermétique avec la PCB (31) et enfermant ladite pointe (121) de piston, ledit bouchon étanche à l'air (32) ayant au moins deux orifices (331, 332), au moins l'un desdits orifices pouvant être fermé par la pointe (121) de piston.

14. Soupape selon la revendication 13, dans laquelle elle comporte en outre un capteur de pression (34) situé sous le bouchon étanche à l'air (32).

15. Soupape selon la revendication 13 ou 14, dans laquelle elle comporte une structure de sous-ensemble actionneur composite (20) selon l'une quelconque des revendications 9 à 12.

16. Soupape selon l'une quelconque des revendications 13 à 15, dans laquelle le nombre d'orifices du bouchon étanche à l'air (32) est de 3.

17. Soupape selon la revendication 15, dans laquelle la distance maximale entre les centres des pointes (121, 121') de piston est comprise entre 5 mm et 20 mm.

18. Soupape selon l'une quelconque des revendications 13 à 17, dans laquelle le produit d'étanchéité compressible (41) est également interposé entre la PCB (31) et le bouchon étanche à l'air (32).

19. Soupape selon l'une quelconque des revendications 13 à 18, dans laquelle le produit d'étanchéité compressible (41) est un matériau élastomère ayant une épaisseur comprise entre 0,2 mm et 2,7 mm.

20. Soupape selon la revendication 19, dans laquelle ledit matériau élastomère est choisi parmi le silicium ou le caoutchouc.

21. Système de soupapes comprenant de 2 à 48 soupapes selon l'une quelconque des revendications 13 à 20.

22. Procédé de régulation de la pression d'un fluide dans un dispositif, dans lequel la pression est régulée par un système de soupape selon la revendication 21.

23. Procédé selon la revendication 22, dans lequel le fluide est choisi parmi de l'air, de l'eau, de l'huile.

24. Procédé selon la revendication 22 ou 23, dans lequel le dispositif est un matelas, un surmatelas, un siège ou un réservoir de fluide.

25. Procédé selon la revendication 22 ou 23, dans lequel le dispositif est un composant automobile, de préférence un lave-glace ou un mécanisme de réglage de siège.
